# EUROPEAN PATENT APPLICATION

(11) **EP 4 455 247 A1**
(43) Date of publication of application: **30.10.2024**
(21) Application number: 24171920.2
(22) Date of filing: 23.04.2024
(51) Int. Cl.: C09K 3/32

(54) **DISPERSING COMPOSITION, METHOD OF OBTAINING THE SAME AND METHOD OF DISPERSING OIL SPILLS ON OPEN WATERS**

(30) Priority: 24.04.2023 PL 44455023
(71) Applicant: PCC Exol Spolka Akcyjna, 56-120 Brzeg Dolny (PL)
(72) Inventor: MAMALA, Wojciech, 48-300 Nysa (PL)
(74) Representative: AOMB Polska Sp. z.o.o.

(57) **Abstract**

The invention relates to a dispersant composition intended for oil spills in open water areas containing at least one non-ionic surfactant, at least one glycol solvent, water, hydroxyamine and an alkali metal hydroxide. The invention also relates to a method for preparing the composition and a method for dispersing oil spills in open water bodies using the composition.

## Description

### Field of the invention

The invention relates to a dispersing composition, a method for preparing such a composition and a method for dispersing oil spills on open water bodies using said composition.

### State of the art

Sources of crude oil, one of the most important energy raw materials, are unevenly distributed on Earth. For this reason, since the 19th century, there has been a significant intensification of oil trade, which forced the unprecedented development of maritime transport of this fossil. As the amount of this raw material on board tankers around the world increased, the likelihood of failures and oil spills directly into the seas and oceans increased, which is still happening occasionally today.

Crude oil is a mixture of hydrocarbons which, with the exception of heavy solid compounds such as bitumen, are lighter than water and therefore remain on its surface. Such an oil slick can pose a threat to all marine organisms, greatly affecting the entire aquatic ecosystem. Another danger is the risk of carrying such a hydrocarbon mixture by wind and sea currents towards the coastline, which is densely populated by extremely sensitive fauna and flora. Therefore, in the case of very large oil spills, it becomes necessary to disperse the oil using chemicals and mechanical forces to contain highly adverse environmental effects. The spills broken down in this way into very small drops are then strongly dispersed, which makes their biodegradation much easier. Chemical dispersants used in such situations are also not environmentally neutral, but their action prevents direct exposure to aquatic and coastal organisms.

The main components of such dispersion mixtures are surface-active compounds (surfactants), i.e. compounds capable of adsorption at the interface between, in this case, crude oil and water and reducing the interfacial tension. The prior art discloses methods for dispersing oil spills based on surfactants or mixtures containing surfactants.

The patent US9797109B2 concerns a method for reducing the area of oil spills on the water surface using a barrier and a non-ionic surfactant. This patent discloses the use of surfactants for such applications with the composition CH₃(CH₂)ₙO(CH₂CH₂O)_{y}H, wherein 8^n^10 and y is on average 8.3.

Similarly, EP2940114B1 discloses a composition based on ethoxylated C9-11 alcohols with 4-6 ethylene oxide (EO) units and alkyl polyglucosides for removing oil contaminants from various surfaces.

Patent application CN104962239A describes a composition dispersing oil spills on water. The composition is characterized by the presence of biosurfactants such as sophorolipid or rhamnolipid, and an organic solvent in the form of 2-butoxyethanol is used additionally.

Patent application US3625857A relates to a method for removing oil spills using a composition consisting of an anionic surfactant and a non-ionic surfactant. The non-ionic surfactant in this composition is based on a fatty alcohol phosphoric ester with a carbon chain length of 10 to 20 and an amount of ethylene oxide, i.e. from 2 to 4 moles of ethylene oxide. Such a low content of ethylene oxide, and therefore a high ratio of the hydrophobic to hydrophilic part, makes the given surfactant insoluble in water, and thus, by accumulating at the phase boundary, it hinders the exchange of substances in the gas phase between the sea/ocean and the atmosphere.

Also in patent application US20140110344A1 there is a description of a composition dispersing oil spills and containing surfactants selected from ethoxylated oils and glycosidic polymers.

In the prior art, there are solutions for removing spills and oil spills of various origins (including petroleum derivatives) using ethoxylated compounds, but they are limited to compositions containing a number of ingredients, such as phosphates, ethoxylated oils, glycoside compounds, surfactants, etc. There are no good solutions based on simple, ecological compositions, with an appropriate degree of dispersibility and a critical concentration of micellization. In the case of ethoxylated alcohols used as surfactants, they have disadvantages in the form of poor hydrophilic - lipophilic balance, which leads to inadequate solubility in water and, therefore, poor dispersibility.

Surprisingly, it turned out that all these disadvantages can be eliminated by using the compositions obtained in accordance with the invention. Such compositions have improved dispersing properties resulting from their exceptional degree of dispersibility and critical micellization concentration, and are ecological due to the source of origin.

### Summary of the invention

In the first aspect, the subject of the invention is a dispersing composition intended for oil spills in open water areas, containing:
a) at least one surfactant,
b) at least one glycol solvent selected from alkylene glycols, alkylene glycol ethers, polyalkylene glycol ethers and mixtures thereof,
c) water,
   characterized in that it further comprises
d) hydroxyamine containing from 2 to 6 carbon atoms, and
e) alkali metal hydroxide,
wherein the surfactant (a) is a non-ionic surfactant of formula 1:

R(OCH₂CH₂)_{y}OH (1)

wherein:
R - is a linear and/or branched hydrocarbon chain containing from 8 to 14 carbon atoms,
y - is an integer from 5 to 12.

Preferably, in the composition according to the invention in formula (1), R is a linear and/or branched hydrocarbon chain containing from 9 to 12 carbon atoms, and more preferably 12 carbon atoms.

Preferably, in the composition according to the invention in formula (1), y is from 6 to 8, in particular 7.

Preferably the content of surfactant (a) is from 5 to 15% by weight based on the total weight of the composition.

Preferably, the composition according to the invention contains at least two different non-ionic surfactants (a) of formula (1), where the mean number of carbon atoms in the R moiety is from 8 to 14, preferably from 9 to 12, and is equal to the sum of the weighted value of the number carbon atoms in the R moiety in each of the non-ionic surfactants according to their weight fraction in the composition. Particularly preferably in the composition according to the invention the mean number of ethylene oxide units is from 5 to 12, preferably from 6.5 to 7.4, and is equal to the sum of the weighted y-value for each of the non-ionic surfactants according to their weight fraction in the composition.

Preferably, the hydroxyamine (d) content is from 0.5 to 2% by weight relative to the total weight of the composition.

Preferably, the content of the glycol solvent (b) is from 1 to 6% by weight based on the total weight of the composition, preferably from 4% to 6% by weight based on the total weight of the composition.

Preferably, the glycol solvent (b) is selected from ethylene glycol, propylene glycol, hexylene glycol, butyl diglycol, butyl glycol and mixtures thereof, and is particularly preferably butyl glycol. Preferably the content of alkali metal hydroxide (e) is from 1 to 10% by weight based on the total weight of the composition.

Preferably in the composition of the invention the critical micellization concentration of the surfactant (a) is below 0.3 g/l.

Preferably, in the composition according to the invention, the degree of dispersibility, determined in accordance with the ASTM F3251-21 standard, is from 14 to 30.

In the second aspect, the subject of the invention is a method for preparing the composition according to the invention defined above, in which the components (a)-(e) of the composition are mixed together at a temperature not exceeding 40°C for 1 to 4 hours.

Preferably, the method according to the invention includes the following steps:
(i) introducing water (c) into a first container in an amount of 50-90% by weight of the total composition;
(ii) adding a non-ionic surfactant (a) in an amount of 5-15% by weight based on the total weight of the composition;
(iii) adding a glycol solvent (b) in an amount of 1-6% by weight based on the total weight of the composition;
(iv) adding hydroxyamine (d) in an amount of 0.5-2% by weight based on the total weight of the composition;
(v) mixing the mixture of components (a)-(d) for 10-30 minutes at room temperature;
(vi) introducing water (c) into a second container immersed in an ice bath in an amount of 10-30% by weight based on the total composition, and then adding sodium hydroxide (e) in an amount of 1-10% by weight based on the total weight of the composition, and mixing for 50-70 minutes;
(vii) adding the sodium hydroxide solution (e) obtained in step (vi) to the mixture of components (a)-(d) previously formed in step (v);
(viii) stirring the solution for 50-70 minutes and allowing it to clear;
   and optionally
(ix) mixing again for 50-70 minutes.

In the third aspect, the invention provides a method for dispersing oil spills in open water bodies, in which the composition according to the invention or obtained by the method according to the invention is applied to an oil spill in an open water bodies.

### Advantages of the invention

The addition of a dispersant helps split the oil spill into much smaller drops, which makes it more biodegradable. Tests carried out in accordance with the ASTM F3251-21 standard using the "Baffled flask test" method prove that the composition according to the invention has dispersing properties for oil spills in water areas. Moreover, precisely defined ethoxylated fatty alcohols are used in the composition according to the invention. Ethoxylated alcohols with the hydrocarbon chain and degree of ethoxylation defined above in formula (1) are very well known among the achievements of science to date, but they are most widely used in cleaning and cosmetic products for obtaining physical mixtures with high detergent effectiveness. Using them as substrates in a mixture dispersing oil spills in water areas is an unconventional approach, which is an element of innovation and non-obviousness of this invention.

The use of surfactants other than ethoxylated fatty alcohols is known in the art, and when used, compounds with a shorter hydrocarbon chain are used. The hydrocarbon chain is the hydrophobic part of the surfactant molecule, so it influences its HLB value (hydrophilic - lipophilic balance). In its simplest terms, HLB is calculated based on the weight percentage of the hydrophilic part to the hydrophobic part in the molecule. This parameter, showing values from 1 to 20, is often used to describe the properties of surfactants. Moreover, the type of emulsion created (O/W or W/O - oil- in-water or water-in-oil, respectively) depends mainly on the surfactant used. Surfactants with an HLB value between 3-6 promote the formation of W/O emulsions. Surfactants with HLB values between 8-16 tend to form O/W emulsions. In this case, it was necessary to obtain an O/W emulsion, therefore the surfactant used has an HLB value in the range of 12-13.

The length of the hydrophobic chain in surfactants determines a number of their properties. A longer hydrocarbon chain allows the surfactant molecules to be packed closer together in the interfacial area, which increases the concentration of this compound there and thus increases its effectiveness. A longer hydrocarbon chain also means a greater tendency of the surfactant to adsorb at the interface and form micelles. Higher adsorption at the phase boundary is equivalent to a higher tendency to change the free energy. Moreover, higher saturation of micelles reduces the interfacial tension, which also improves the effectiveness of such a dispersing composition. The critical micellization concentration (CMC) value indicates the amount of surfactant required to achieve the maximum reduction in surface tension. The values expressed in mg of active substance per liter of solution show that the lower the CMC, the less surfactant is required for effective emulsification, solubilization and dispersion of oil spills on a hydrophilic surface. Application tests of the critical micellization concentration for the surfactant used in this case compared to surfactants standardly used in this type of applications prove that a several dozen times lower concentration of surfactant is needed to obtain the same surface properties.

**Table 1 micellization concentration results for selected surfactants**

| **Type of surfactants** | **CMC (mg/l)** |
|---|---|
| Ethoxylated (7EO) C12-C14 fatty alcohols | 8 |
| Ethoxylated (6EO) C9-C11 fatty alcohols | 187 |
| Ethoxylated (8EO) C9-C11 fatty alcohols | 292 |

Another advantage of the present invention is based on the origin of the raw material used to produce the surfactant. Currently, approximately 50% of surfactants come from the processing of fossil fuels, and these are non-renewable sources. This has prompted the entire industry to look for greener alternatives. More and more surfactants come from natural sources, and in the discussed case, the direct source of the fatty alcohol used for ethoxylation is palm kernel oil. This, of course, affects the idea of sustainable development - one of the most important trends in contemporary business, specifically visible in case of large-scale chemical production. Sustainable development is a component of reducing the consumption of non-renewable raw materials and limiting the use of non-recyclable materials in production. In the case of the dispersant composition, the surfactant used is also based on oil certified by RSPO (Roundtable on Sustainable Palm Oil), an organization that controls global standards for sustainable palm oil production. RSPO is the association that has defined the environmental and social requirements to be met by that producers wishing to produce Certified Sustainable Palm Oil. Proper implementation of these criteria in practice will allow to at least partially slow down the disastrous impact of palm oil cultivation on various ecosystems and society. In order to obtain the appropriate certificate, palm oil processing companies must meet a series of stringent RSPO requirements, which are verified by accredited external certification bodies.

The term "in the range" used in reference to the number of ethylene oxide units or carbon atoms in the case of the R substituent results from the nature of the ingredients used in the composition according to the invention. The surfactant used in the composition according to the invention is a polymer compound, so in practice it is a mixture of polymers with a similar structure, but differing within a certain narrow range in the content of the mentioned groups. In case of this type of ingredients, it is difficult to provide a precise quantitative composition.

The method of preparing the composition according to the invention includes introducing components (a)-(e) into a vessel of appropriately selected volume and then mixing them until a homogeneous composition is obtained. Such mixing may be carried out, for example, by means of a mechanical mixer, such as a mechanical mixer with a propeller tip. Preferably, the mixing temperature corresponds to room temperature (about 25°C), and the maximum temperature during the preparation of the composition cannot exceed about 40°C.

The composition according to the invention is intended for use as a dispersant for oil spills in open water spaces. To a person skilled in the art, open water means any body of water, including a pond, lake, sea, ocean, swimming pool, river, stream. Applying the composition to an oil spill on the surface of an open water body involves dispersing it by spraying, pouring or any other method.

The invention is illustrated by the following embodiments.

### EXAMPLES

### Example 1 [comparative]

The composition was prepared as follows:
(i) water was introduced into a 1 L beaker in an amount of 70% by weight relative to the weight of the entire composition;
(ii) 2-(2-butoxyethoxy)ethanol was added in an amount of 5% by weight relative to the total weight of the composition;
(iii) monoethanolamine was added in an amount of 1% by weight relative to the total weight of the composition;
(iv) all substrates were mixed for 20 minutes at room temperature using a mechanical mixer with a propeller tip;
(v) water was added to a separate 500 ml beaker immersed in an ice bath in an amount of 20% by weight relative to the entire composition, and then NaOH was added in an amount of 4% by weight relative to the total weight of the composition; the whole mixture was mixed for 60 min using a mechanical mixer with a propeller tip;
(vi) the sodium hydroxide solution was then added to the mixture previously formed in step (iv);
(vii) the solution was stirred for 1 h; initially it is cloudy, so it was left to stand for 24 h (clarification time) and then stirred again for 1 h.

### Results:

The composition from Example No. 1 was prepared without the addition of a surfactant (a). Dispersion efficiency tests were carried out using the "Baffled flask test" method. The degree of dispersibility was determined by comparing the mass of crude oil that was introduced into artificial sea water with the mass of crude oil that remains in this water under the upper layer of crude oil (under specific experimental conditions). The arithmetic mean of the four dispersibility test results was 24.74 with a standard deviation of 2.97.

### Example 2 [comparative]

The composition was prepared as follows:
(i) water was introduced into a 1 L beaker in an amount of 65% by weight relative to the weight of the entire composition;
(ii) a non-ionic surfactant with the general formula C₁₂H₂₅(OCH₂CH₂)₇OH was added in an amount of 10% by weight relative to the total weight of the composition;
(iii) monoethanolamine was added in an amount of 1% by weight relative to the total weight of the composition;
(iv) all substrates were mixed for 20 minutes at room temperature using a mechanical mixer with a propeller tip;
(v) water was added to a separate 500 ml beaker immersed in an ice bath in an amount of 20% by weight relative to the entire composition, and then NaOH was added in an amount of 4% by weight relative to the total weight of the composition; the whole mixture was mixed for 60 min using a mechanical mixer with a propeller tip;
(vi) the sodium hydroxide solution was then added to the mixture previously formed in step (iv);
(vii) the solution was stirred for 1 h; initially it is cloudy, so it was left to stand for 24 h (clarification time) and then stirred again for 1 h.

### Results:

The composition from Example No. 2 was prepared without the addition of a glycol solvent in the form of 2-(2-butoxyethoxy)ethanol. Dispersion efficiency tests were carried out using the "Baffled flask test" method. The degree of dispersibility, similarly to Example No. 1, was determined by comparing the mass of crude oil that was introduced into artificial sea water with the mass of crude oil that remains in this water under the upper layer of crude oil (under specific experimental conditions). The arithmetic mean of the four dispersibility test results was 27.32 with a standard deviation of 2.23. A higher result of the degree of dispersibility than in the case of the composition from Example No. 1 indicates that the surfactant in the amount in which it occurs in the composition has a greater impact on the degree of dispersibility of the final product than the glycol solvent in form of 2-(2-butoxyethoxy)ethanol in the amount in which it occurs in the composition.

### Example 3 [comparative]

The composition was prepared as follows:
(i) water was introduced into a 1 L beaker in an amount of 84% by weight relative to the weight of the entire composition;
(ii) a non-ionic surfactant with the general formula C₁₂H₂₅(OCH₂CH₂)₇OH was added in an amount of 10% by weight relative to the total weight of the composition;
(iii) 2-(2-butoxyethoxy)ethanol was added in an amount of 5% by weight relative to the total weight of the composition;
(iv) monoethanolamine was added in an amount of 1% by weight relative to the total weight of the composition;
(v) all substrates were mixed for 20 minutes at room temperature using a mechanical mixer with a propeller tip;
(vi) the sodium hydroxide solution was then added to the mixture previously formed in step (v);
(vii) the solution was stirred for 1 h; initially it is cloudy, so it was left to stand for 24 h (clarification time) and then stirred again for 1 h.

### Results:

The composition from Example No. 3 was prepared without the addition of the so-called dispersibility booster in form of sodium hydroxide solution. Dispersion efficiency tests were carried out using the "Baffled flask test" method. The degree of dispersibility, similarly to Examples No. 1 and 2, was determined by comparing the mass of crude oil that was introduced into artificial sea water with the mass of crude oil that remains in this water under the upper layer of crude oil (under specific experimental conditions). The arithmetic mean of the four dispersibility test results was 14.16 with a standard deviation of 1.00. The lower result of the degree of dispersibility than in the case of the composition from Example No. 1 indicates that sodium hydroxide in the amount in which it occurs in the composition has a greater impact on the degree of dispersibility of the final product than the glycol solvent in the form of 2-(2-butoxyethoxy)ethanol in the amount, in which it occurs in the composition.

### Example 4

The composition was prepared as follows:
(i) water was introduced into a 1 L beaker in an amount of 60% by weight relative to the weight of the entire composition;
(ii) a non-ionic surfactant with the formula C₁₂H₂₅(OCH₂CH₂)₇OH was added in an amount of 10% by weight relative to the total weight of the composition;
(iii) 2-(2-butoxyethoxy)ethanol was added in an amount of 5% by weight relative to the total weight of the composition;
(iv) monoethanolamine was added in an amount of 1% by weight relative to the total weight of the composition;
(v) all substrates were mixed for 20 minutes at room temperature using a mechanical mixer with a propeller tip;
(vi) water was added to a separate 500 ml beaker immersed in an ice bath in an amount of 20% by weight relative to the entire composition, and then NaOH was added in an amount of 4% by weight relative to the total weight of the composition; the whole mixture was mixed for 60 min using a mechanical mixer with a propeller tip;
(vii) the sodium hydroxide solution was then added to the mixture previously formed in step (v).
(viii) the solution was stirred for 1 h; initially it is cloudy, so it was left to stand for 24 h (clarification time) and then stirred again for 1 h.

### Results:

The composition of Example No. 4 was prepared using all components (a)-(e) of the composition according to the invention. Dispersion efficiency tests were carried out using the "Baffled flask test" method. The degree of dispersibility, similarly to Examples No. 1, 2 and 3, was determined by comparing the mass of crude oil that was introduced into artificial sea water with the mass of crude oil that remains in this water under the upper layer of crude oil (under specific experimental conditions). The arithmetic mean of the four dispersibility test results was 29.65 with a standard deviation of 4.85. The highest result of the degree of dispersibility of all the examples cited so far proves that all the ingredients contained in the composition have a direct impact on the dispersion of crude oil and, acting synergistically, provide the best results.

### Example 5

The composition was prepared as follows:
(i) water was introduced into a 1 L beaker in an amount of 60% by weight relative to the weight of the entire composition;
(ii) a non-ionic surfactant with the formula C₉H₁₉(OCH₂CH₂)₈OH was added in an amount of 10% by weight relative to the total weight of the composition;
(iii) 2-(2-butoxyethoxy)ethanol was added in an amount of 5% by weight relative to the total weight of the composition;
(iv) monoethanolamine was added in an amount of 1% by weight relative to the total weight of the composition;
(v) all substrates were mixed for 20 minutes at room temperature using a mechanical mixer with a propeller tip;
(vi) water was added to a separate 500 ml beaker immersed in an ice bath in an amount of 20% by weight relative to the entire composition, and then NaOH was added in an amount of 4% by weight relative to the total weight of the composition; the whole mixture was mixed for 60 min using a mechanical mixer with a propeller tip;
(vii) the sodium hydroxide solution was then added to the mixture previously formed in step (v);
(viii) the solution was stirred for 1 h; initially it is cloudy, so it was set aside for 24 h (clarification time) and then stirred again for 1 h.

### Results:

The composition of Example No. 5 was prepared using all components (a)-(e) of the composition according to the invention. Dispersion efficiency tests were carried out using the "Baffled flask test" method. The degree of dispersibility, similarly to Examples No. 1, 2, 3 and 4, was determined by comparing the mass of crude oil that was introduced into artificial sea water with the mass of crude oil that remains in this water under the upper layer of crude oil (under specific experimental conditions). The arithmetic mean of the four dispersibility test results was 28.52 with a standard deviation of 3.24.

## Claims

1. A dispersing composition intended for oil spills in open water areas, containing:
(a) at least one surfactant,
(b) at least one glycol solvent selected from alkylene glycols, alkylene glycol ethers, polyalkylene glycol ethers and mixtures thereof,
(c) water,
**characterized in that it** further contains
(d) a hydroxyamine containing from 2 to 6 carbon atoms, and
(e) alkali metal hydroxide,
wherein the surfactant (a) is a non-ionic surfactant of formula 1:
R(OCH₂CH₂)_{y}OH (1)
wherein:
R - is a linear and/or branched hydrocarbon chain containing from 8 to 14 carbon atoms,
y - is an integer from 5 to 12.

2. The composition according to claim 1, wherein in formula (1) R is a linear and/or branched hydrocarbon chain containing from 9 to 12 carbon atoms, preferably 12 carbon atoms.

3. The composition according to claim 1 or 2, wherein in formula (1) y is from 6 to 8, preferably 7.

4. The composition according to any one of claims 1-3, wherein the surfactant (a) content is from 5 to 15% by weight relative to the total weight of the composition.

5. The composition according to any one of claims 1-4, containing at least two different non-ionic surfactants (a) of formula (1), wherein the mean number of carbon atoms in the R moiety is from 8 to 14, preferably from 9 to 12, and is equal to the sum of the weighted value of the number of carbon atoms in the R moiety in each of the non-ionic surfactants according to their weight fraction in the composition.

6. The composition according to claim 5, wherein the mean number of ethylene oxide units is from 5 to 12, preferably from 6.5 to 7.4, and is equal to the weighted sum of the y-values for each of the non-ionic surfactants according to their weight fraction in composition.

7. The composition according to any one of claims 1-6, wherein the hydroxyamine (d) content is from 0.5 to 2% by weight relative to the total weight of the composition.

8. The composition according to any one of claims 1-7, wherein the content of the glycol solvent (b) is from 1 to 6% by weight relative to the total weight of the composition, preferably from 4% to 6% by weight relative to the total weight of the composition.

9. The composition according to any one of claims 1-6, wherein the glycol solvent (b) is selected from ethylene glycol, propylene glycol, hexylene glycol, butyl diglycol, butyl glycol and mixtures thereof, and is preferably butyl glycol.

10. The composition according to any one of claims 1-9, wherein the alkali metal hydroxide (e) content is from 1 to 10% by weight relative to the total weight of the composition.

11. The composition according to any one of claims 1-10, wherein a critical micellization concentration of the surfactant (a) is below 0.3 g/l.

12. The composition according to any one of claims 1-11, wherein a degree of dispersibility, determined in accordance with the ASTM F3251-21 standard, is from 14 to 30.

13. A method for preparing the composition defined in any one of claims 1-12, in which the components (a)-(e) of the composition are mixed together at a temperature not exceeding 40°C for 1 to 4 hours.

14. The method of claim 13, comprising the following steps:
(i) introducing water (c) into a first container in an amount of 50-90% by weight of the total composition;
(ii) adding a non-ionic surfactant (a) in an amount of 5-15% by weight based on the total weight of the composition;
(iii) adding a glycol solvent (b) in an amount of 1-6% by weight based on the total weight of the composition;
(iv) adding hydroxyamine (d) in an amount of 0.5-2% by weight relative to the total weight of the composition;
(v) mixing the mixture of components (a)-(d) for 10-30 minutes at room temperature;
(vi) introducing water (c) into a second container immersed in an ice bath in an amount of 10-30% by weight based on the total composition, and then adding sodium hydroxide (e) in an amount of 1-10% by weight based on the total weight of the composition, and mixing for 50-70 minutes;
(vii) adding the sodium hydroxide solution obtained in step (vi) to the mixture of components (a)-(d) previously formed in step (v);
(viii) stirring the solution for 50-70 minutes and allowing it to clear;
and optionally
(ix) mixing again for 50-70 minutes.

15. A method for dispersing oil spills in open water, wherein the composition specified in any one of claims 1-12 or obtained by the method specified in claim 13 or 14 is applied to the oil spill in open water.
